# EUROPEAN PATENT APPLICATION

(11) **EP 4 450 020 A1**
(43) Date of publication of application: **23.10.2024**
(21) Application number: 23186722.7
(22) Date of filing: 20.07.2023
(51) Int. Cl.: A61C 7/36

(54) **ORTHODONTIC DEVICES**

(30) Priority: 18.04.2023 US 202363460265 P
(71) Applicant: Orthodontic Research and Development, S.L., 08022 Barcelona (ES)
(72) Inventor: CARRIERE LLUCH, Luis, 08017 Barcelona (ES); TUCKER, Allen, Oceanside, 92054 (US); PATEL, Nihir, San Marcos, 92078 (US); RIAT, Tejdeep S, San Marcos, 92078 (US); THOMPSON, Jim, Savannah, 31401 (US)
(74) Representative: Bardehle Pagenberg S.L.

(57) **Abstract**

Orthodontic devices and assemblies for the segmental distalization of a posterior jawbone area is disclosed. The orthodontic device comprises a mesial element having a mesial base surface configured for attachment to a premolar or a canine, an arm comprising a pivot at a distal end of the arm and a distal element having a distal base surface configured for attachment to a molar. The distal element or a distal portion of the arm comprises a distal anchoring structure for coupling a first distalization force element. The mesial element may comprise a projection defining a groove for fitting an elastic band, wherein the groove is arranged along a rounded convex surface of the projection, and wherein the rounded convex surface has a diameter of at least 3mm.

## Description

The present disclosure relates to an orthodontic device, and more particularly relates to an orthodontic device for segmental distalization of a posterior jawbone sector. The present disclosure further relates to methods of treatment using such devices.

### BACKGROUND ART

Depending on a patient's malocclusion, a variety of orthodontic treatments is available. In some of these treatments, extraction of teeth may be required in order to create space for the remaining teeth. In some treatments, a distalizing element may be used, possibly in combination with the extraction of one or more teeth. The present disclosure particularly relates to a distalizing element for distalizing a segment of teeth.

A segment of teeth is herein defined as a group of neighbouring teeth, i.e. two or more neighbouring teeth. Distalization of the segment of teeth relates to moving a group of teeth together. In particular, in the present disclosure distalization refers moving a group of teeth in the distal direction of the mouth. The group of teeth may be located in the upper jawbone (maxilla) or in the lower jawbone (mandible).

A particular distalizing element is known from e.g. EP 1 433 435 and EP 1 649 824. These distalizers are especially adapted for the segmental distalization of the canine-to-molar posterior maxillary area. The distalizers of these documents comprise a mesial element which may be fixed by its base to an upper canine, and further comprises a distal element which may be fixed by its base to an upper molar, in particular the first molar.

The mesial element in these designs comprises both a base, and an arm that connects it to the distal element. The arm may be substantially arch shaped and may comprise a ball member at one of its ends. This ball member is received in a receptacle of the distal element that has a complementary shape to the ball member.

The mesial element may comprise a blunt projection that extends substantially forwards which may serve as a hooking element. In use, a bracket with a hook may be attached to a mandibular molar and an (orthodontic) rubber band may be suspended around this hook and the hooking element on the mesial element.

This way, a force pulling the maxillary canine backwards is provided. If the patient is wearing e.g. a splint (or another fixation device) that acts as a solid anchor and fixes the teeth of the mandible in position, it may be ensured that the teeth in the mandible do not move forwards, and that the maxillary canine is pulled backwards.

Due to the connection between the mesial element and the distal element of the distalizer, the maxillary molar may thus also be pushed backwards. At the same time, due to the shape of the arm in between the canine and the molar and due to the position of the distal element on the molar, a rotational force is also exerted upon the molar. This rotational force may result in a pivot about the palatal root of the maxillary molar. Also, a rotation in the distal direction of the molar ("uprighting") may result. Thus a backwards force and a rotational force may be exerted upon the molar at the same time.

In order to avoid that the maxillary molar rotates too much in the distal direction (i.e. in this case, it would assume an orientation in which it is tilted backwards), the shape of the receptacle and the ball member are such that with a predetermined rotation of the ball member with respect to the upper molar, the ball member touches the inside of the receptacle and cannot rotate further. To this end, both the mesial element and distal element are mounted at the right height on the molar and canine and are mounted substantially straight along the locally defined mandible-maxilla (straight up-down) direction on the surface of the tooth. The arm is provided at a predefined angle with respect to the ball member. When both the canine and molar are actually straight, this angle will make sure that the ball member or the arm of the mesial element touches the border of the receptacle and cannot rotate further.

Similarly, the shape of the ball member and the border of the receptacle may be such that a rotation of the upper molar around its palatal root is limited. Once a predetermined rotation is reached, the arm may touch the border of the receptacle and the ball member is not able to rotate further.

It may thus be ensured that a distalization of the canine-molar segment may be combined with a proper (re)orientation of the set of teeth in the maxillary posterior region.

US2011/0244414 provides a further distalization device which has a reduced height, as compared to the devices described in EP 1 433 435 and EP 1 649 824. The distalization device of US 2011/0244414 consists of a single element coupled to a canine/premolar and a molar. The coupling involving a ball member and receptacle is not present in this device. This allows a height reduction, and makes it possible to use the device in treatments of many patients in the mandible, but limits the functionality of the distalization device, as the rotation of the mesial element with respect to the distal element and corresponding collision points of the ball member or arm and the receptacle are eliminated. These devices therefore have a limited ability to adjust the position of a molar both in "uprighting" and in torsion.

Another distalization device is known from WO 2018/219858. This prior art document discloses an orthodontic device for the segmental distalization of a posterior jawbone area comprising a mesial element including a projection for coupling with a traction element, and an arm wherein the arm comprises an elongate transverse pivot at a distal end of the arm. The elongate transverse pin is received in a receptable of a distal base. The elongate transverse pin is able to pivot with respect to the distal base and thus allows segmental distalization in combination with uprighting and rotation around the molar palatal root. An interior of the receptacle limits the pivotal movement of the elongate transverse pin. In an example, the elongate transverse pin is substantially condyle-shaped. These devices can provide effective segmental distalization and have a reduced height and thereby facilitate use particularly in the mandible of patients.

WO 2018/219858 describes a process for assembly of the distalization device, according to which the receptacle of the distal base is slightly enlarged with respect to the pin so that the pin can be introduced without deforming the pin. After introduction of the pin, the opening of the receptacle may be reduced, involving e.g. local deformation or deformation of the complete border. In particular, local deformation involving coining is a preferred example.

The present disclosure provides further improvement of distalization devices and methods of treatment using distalization devices.

### SUMMARY

According to a first aspect, an orthodontic device for the segmental distalization of a posterior jawbone area is provided. The device comprises a mesial element having a mesial base surface configured for attachment to a premolar or a canine, an arm comprising a pivot at a distal end of the arm, and a distal element having a distal base surface configured for attachment to a molar, and the distal element having a receptacle. The pivot of the arm is arranged in the receptacle, and the distal element or a distal portion of the arm comprises a distal anchoring structure for coupling a first distalization force element.

A device in accordance with the first aspect can provide for segmental distalization, wherein the distalization force is provided closer to the molar. In specific malocclusions, and/or specific patients, it may be complicated to provide for a traction or pulling force on the mesial element (typically attached to a canine, possibly to a premolar). In these scenarios, the orthodontic device of the first aspect may be used for segmental distalization wherein a pulling or pushing force is provided directly at or near the molar.

In examples, providing the distalization force at or near the molar may reduce canine extrusion. In examples, providing a distalization at or near the molar may be more easily provided dependent on a patient's malocclusion.

In some examples, the mesial element or a proximal portion of the arm may comprise a projection for coupling with a second distalization force element. The second distalization force element may particularly be an elastic band. In these examples, a distalization force may be provided at the mesial element, at or near the distal element, or both.

In some examples, the arm may be integrally formed with or fixedly attached to the mesial element. In examples, the pivot may be substantially condyle-shaped, or ball-shaped, or wherein the pivot is ball-shaped with diametrically opposed planar surfaces. Although in the present disclosure and in the figures, a distalizer with a substantially condyle-shaped pivot has generally been shown, it should be clear that the illustrated and described methods for assembly are generally applicable with other pivots as well. In particular, the pivot elements such as described in EP 1 433 435, EP 1 649 824 and in WO 2018/219858. In particular, the pivot may be substantially ball-shaped, or may be shaped as a ball with diametrically opposed planer surfaces, or may be a substantially elongate pin.

In some examples, the distal anchoring structure may comprise an orifice for receiving and retaining a part of the first distalization force element. Throughout the present disclosure an orifice may be regarded as a hole or loop through which a part of the first distalization force element may be guided so as to couple the first distalization force element to the orthodontic device. The orifice may be configured as an eye, or eyelet, as a hole or opening.

In some examples, the anchoring structure may be provided at a distal portion of the arm. In the present disclosure, the distal portion of the arm may be regarded as the most distal 33%, preferably the most distal 25% of the arm. In examples, the anchoring structure may comprise one or more protrusions on the arm.

In a second aspect of the present disclosure, a method for treating a malocclusion in a patient is provided. The method comprises providing the orthodontic device according to any example of the first aspect. The method further comprises attaching the mesial base surface of the orthodontic device to a premolar or canine of the patient and attaching the distal base surface of the orthodontic device to a molar of the patient. The method further comprises providing a first dsitalization force element and coupling the first dsitalization force element to the distal anchoring structure and activating the first dsitalization force element.

In accordance with this aspect, a method of treatment for distally moving a segment of teeth is provided in which a distalization force is applied at or near the molar.

In some examples, the method may further comprise attaching an elastic band around a projection on the arm or on the mesial element, and around an anchor mounted in a mouth of the patient. The anchor may be a hook on a bracket or on a molar tube, or on a temporary anchorage device (TAD) or on a button mounted on a tooth (e.g. a Carriere Motion 3D sidekick^{™}), a pin, screw or any other anchor that is suitable for retaining an elastic band.

In examples, in particular for treating a class II malocclusion, the orthodontic device is arranged in a maxilla of the patient. In the examples, the first dsitalization force element may be a class II correction device. Suitable class II correction device include e.g. a Herbst appliance, a Forsus appliance, a Jasper Jumper or a Powerscope^{™}, commercially available from American Orthodontics, Twin Force^{®} Bite Corrector, TruEase^{™} Bite Corrector commercially available from Ortho Technology, CS^{®}5 commercially available from Dynaflex^{®}. Most or all of these devices may be intermaxiallary devices.

In further examples, the first distalization force element may be an intramaxillary device. The first distalization force may be an elastic (rubber) ligature, nitinol ligature, coil spring or other.

In other examples, the orthodontic device may be arranged in a mandible of the patient, e.g. to correct a class III malocclusion. In such examples, class III correction devices, and particularly intermaxillary class III correction devices may function as the first distalization force element. The aforementioned class II devices may generally also be used as class III devices.

In a further aspect, a kit is provided, which comprises an orthodontic device of the first aspect and an adapter for coupling to the first distalization force element. Such an adapter may serve to couple a specific orthodontic appliance (Herbst, Forsus, etc.) to the orthodontic device. This can allows orthodontic appliances of different brands to be used in combination with the orthodontic device. In some examples, such a kit may comprise multiple adapters for coupling to a variety of first distalization force elements.

In yet a further aspect, an orthodontic assembly for the segmental distalization of a posterior jawbone area is provided. The orthodontic assembly comprises a mesial element having a mesial base surface configured for attachment to a premolar or a canine, an arm comprising a pivot at a distal end of the arm, a distal element having a distal base surface configured for attachment to a molar and a receptacle. The pivot of the arm is arranged in the receptacle. The mesial element comprises a projection and the assembly further comprising an anchor, such that an elastic band can be fitted around the projection and the anchor to provide a distalization force. The projection is shaped such that when a mesial portion of the elastic band is arranged around the projection, a first portion of the elastic band adjacent to the mesial portion at a first side of the mesial portion and a second portion of the elastic band adjacent to the mesial portion at a second side of the mesial portion are not parallel to each other.

In accordance with this aspect, the projection around which the elastic band is fitted may be wider than in prior art device, The projection may be so side that the portions of the elastic band extending directly therefrom e.g. to an intermaxillary anchor (such as a Motion 3D sidekick, or a hook on a molar tube or bracket) are not parallel to each other. The force distribution around the projection may be more homogenous than in the prior art, and friction may be reduced as compared to the prior art devices. This can make an orthodontic treatment, and particularly an initial stage of treatment of a class II or class III malocclusion more efficient. Results may be obtained more quickly than in the prior art.

In some examples, the projection may have a rounded groove for receiving the mesial portion of the elastic band. The groove may be formed between a base of the mesial element and an edge of the projection. The projection may have a substantially circular cross-section through a plane of the groove in some examples. In other examples, a cross-section through a plane of the groove may be substantially ovaloid.

In some examples, a mesial edge of the projection may substantially coincide with a mesial edge of the mesial base surface. In other examples, a mesial edge of the projection is arranged anterior of a mesial edge of the mesial base surface.

In yet a further aspect, an orthodontic device for the segmental distalization of a posterior jawbone area is provided. The orthodontic device comprises a mesial element having a mesial base surface configured for attachment to a premolar or a canine, an arm comprising a pivot at a distal end of the arm, and a distal element having a distal base surface configured for attachment to a molar and a receptacle. The pivot of the arm is arranged in the receptacle and the mesial element comprises a projection defining a groove for fitting an elastic band. The groove is arranged along a rounded convex surface of the projection, and the rounded convex surface has a diameter of at least 3 mm, and specifically 5 mm or more.

An orthodontic device of this aspect can provide for a more efficient treatment of a class II or class III malocclusion.

In some examples, the distal element may comprise an anchoring structure for coupling with a distalization force device. In some examples, a proximal portion of the arm comprises a hole for coupling an auxiliary arm.

In some examples, the pivot may have a mesial surface and a distal surface, wherein an interior shape of the receptacle is such that the pivot can be rotated about the first axis over an angle between 1º and 45º. Optionally, herein the rotation about the first axis is limited by the mesial and/or distal surface touching against an inside of the receptacle. That is, the interior shape of the receptacle is such that it permits the indicated range of rotation.

The pivot having a mesial surface and a distal surface entering into contact with an inside of the receptacle to limit the rotation around the first axis provides the functionality of limiting uprighting of the molar.

In some examples, the pivot can be rotated about the first axis over an angle between 5º and 20º, and specifically between 8º and 12º.

In some examples, the pivot may be substantially cylindrical. In further examples, cross-sectional dimensions of the pivot may reduce gradually from a central point of attachment to the arm towards both extremes of the pivot. An aspect of the gradual reduction is that a smoothly increasing contact between the distal and mesial surfaces of the transverse pivot and the inside of the receptacle is provide as the transverse pivot rotates about the first axis.

In some examples, the pivot may have a longitudinal axis and the receptacle may be such that the transverse pivot can be rotated about the longitudinal axis over an angle between 0º and 60º, specifically between 15º and 45º. The degree of rotation allowed along the longitudinal axis may be limited by the arm colliding against an inside of the receptacle. The degree of rotation allowed determines the rotation of the molar about its palatal root. Rotation around the first and the second axis, in combination with the reduced height of the device enables treatment of patients with differing dental scenarios, and different malocclusions.

In some examples, the pivot may have an upper surface and a lower surface, and the interior shape of the receptacle may be such that the transverse pivot can be rotated about the second axis and over an angle between 1º and 30º, specifically between 5º and 15º. Optionally, the rotation about the second axis may be limited by the upper and/or lower surface touching against an inside of the distal cap, and/or against the distal base. In these examples, moments and forces provoked by torsional forces along the arm of the orthodontic device may be well absorbed by the receptacle.

In some examples, a centre plane is defined by the first axis and the second axis (at the height of the arm of the mesial element), and the pivot is symmetrical with respect to the centre plane. In some examples, a centre plane is defined by the first axis and the second axis, and the receptacle may be asymmetrical with respect to the centre plane. Asymmetries may be introduced in the device to allow for more rotation in one direction than another. Asymmetries may be present in the transverse pivot and/or in the inside of the distal cap.

In some examples, a third axis is arranged perpendicular to the first and to the second axis, and an angle between the third axis and the longitudinal axis of the transverse pivot may be between 0º and 15º.

Precisely defined collision points to limit the range of rotation around the first axis, the second axis and/or the third axis may be provided. The collision points may be defined particularly by contact between the pivot and an inside of the receptacle, or the arm and an edge of the receptacle, e.g. a top edge or side edge at an entry side of the receptacle. In some examples, the arm 33 may have a particular curvature to determine the collision points.

Various aspects may be combined with each other. Examples of various of the different aspect may be combined with each other.

Additional objects, advantages and features of embodiments of the invention will become apparent to those skilled in the art upon examination of the description or may be learned by practice of the invention.

### BRIEF DESCRIPTION OF THE DRAWINGS

Particular embodiments of the present invention will be described in the following by way of non-limiting examples, with reference to the appended drawings, in which:
Figures 1A - 1B illustrates some of the terminology used herein;
Figures 2A - 2C illustrate a prior art orthodontic device;
Figures 3A - 3C illustrate an example of an orthodontic device according to the present disclosure;
Figures 4A - 4B schematically illustrates examples of used of an orthodontic device, and examples of methods of treatment;
Figure 5 illustrates an example of a combination of an orthodontic device with a first distalization force element;
Figures 6A - 6C schematically illustrate different examples of an orthodontic device wherein a distal element comprises an anchoring structure for coupling with a first distalization force element;
Figures 7A - 7D schematically illustrate different examples of an orthodontic device wherein a distal portion of an arm of an orthodontic device comprises an anchoring structure;
Figures 8A - 8C schematically illustrate an example of an orthodontic device;
Figure 8D schematically illustrates a comparison of forces on the example of the orthodontic device of figure 8 and an orthodontic device of the prior art;
Figure 9 schematically illustrates a side view of an orthodontic device according to an example; and
Figures 10A - 10C schematically illustrate yet a further example of an orthodontic device incorporating a distal anchoring structure.

### DETAILED DESCRIPTION OF EMBODIMENTS

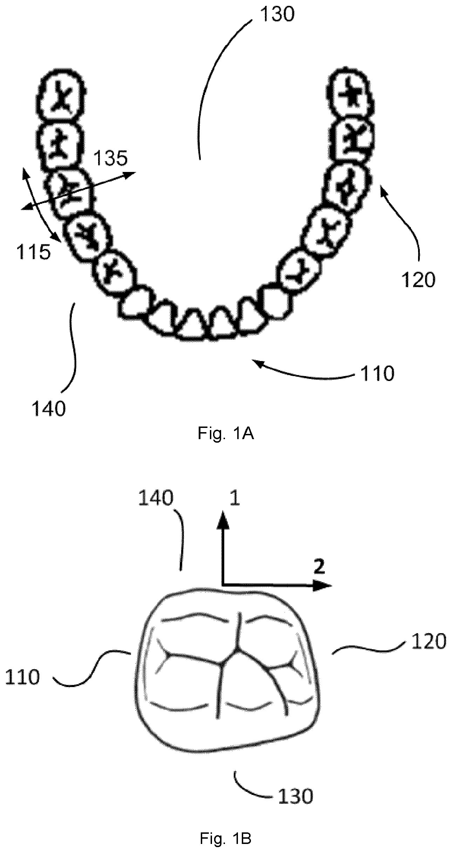

Figure 1A schematically illustrates the arrangement of teeth in the lower jaw (mandible). A front portion of the mouth 110 may be referred to as a mesial region. A rear portion of the mouth 120 may be referred to as a distal region. An inner portion of the mouth behind the teeth 130 may be referred to as a lingual region. An outer portion of the mouth 140 may be referred to as a labial region. A mesial-distal direction 115 with respect to a specific tooth (first molar) has been schematically indicated in figure 1A. Also indicated in figure 1A is a lingual-labial direction 135 with respect to the same tooth. This terminology will be adhered to in the present disclosure.

Figure 1B schematically illustrates a molar. A mesial side of the molar is indicated by reference sign 110, whereas a distal side of the molar is indicated with reference sign 120. Reference signs 130 and 140 respectively indicate the lingual and labial sides of the molar.

In the present disclosure, a first axis is defined as an axis substantially perpendicular to a base surface of a distal element attached to a lingual surface of the molar. In figure 1B, the first axis is indicated with reference sign 1. A second axis may be defined as extending along the mesial-distal direction substantially parallel to the base surface of the distal element. The second axis 2 is perpendicular to the first axis 1.

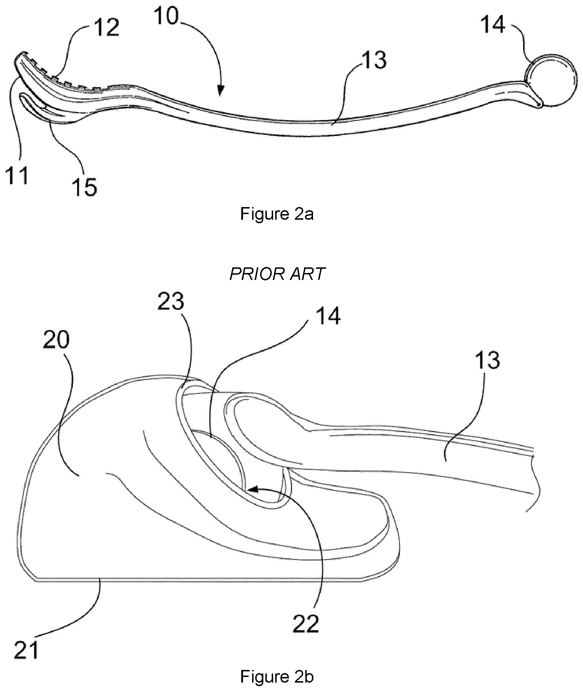

Figures 2A - 2C schematically illustrate a prior art orthodontic device used for segmental distalization. The orthodontic device comprises a mesial element 10 and a distal element 20. The mesial element 10 has a base 11 which may be configured to be attached to a canine. The distal element 20 may be configured to be attached to a molar.

In an example, the mesial element may be attached to a maxillary canine and the distal element may be attached to a maxillary molar or premolar. An anchor for attachment of a traction device such as e.g., a rubber band may then be attached in the mandible.

The mesial element may be attached to a canine in the maxilla, and the distal element may be attached to a molar in the maxilla. In this scenario, an anchor may be attached in the mandible.

In this example, the projection or hook 15 is provided at a most mesial end of the device. In other examples, the projection of hook may be provided elsewhere, e.g. along the arm 13.

The mesial element has a mesial base 11 having a mesial base surface 12 which is configured for being attached to a canine or premolar. The mesial base surface 12 may include a number of protrusions or some form of roughness for attachment to a canine. This base surface may be slightly concave to adapt to the specific tooth it is designed to be attached to.

Before attachment, the surface of the tooth may be cleaned, possibly etched and subsequently dried. Then, an adhesive may be applied to the surface of the tooth. It is known to use an adhesive which may be activated using light. The orthodontic appliance, possibly also comprising an adhesive on its base surface may then be attached to the surface of the tooth. The adhesive may spread in the channels formed between the protrusions on the mesial base surface.

After activation of the adhesive using e.g. light, the orthodontic appliance may be firmly fixed to the tooth. Different types of adhesives may be used, such as e.g. composite resins or glass ionomer cement. This process is also referred to as "bonding", or, depending on the adhesive used "cement bonding". Due to the channels that widen towards the edges, improved mechanical retention can be achieved.

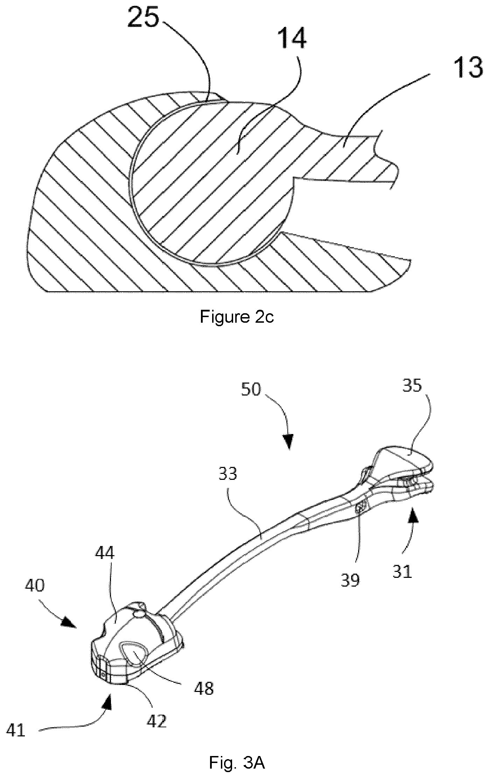

Figures 2B and 2C also illustrate a distal element 20 having a distal base surface 22 adapted to be fixed to a molar surface. Also the distal base surface 22 may comprise a certain roughness or protrusions that aide in bonding to the molar. In the illustrated example, the protrusions may be smaller than on the mesial base surface. The spaces between the protrusions can be occupied by adhesives in order to mechanically retain the distal base surface on the molar.

The anchor (e.g. attached in the mandible) may be a TAD, a bracket, or molar tube, or any other device which can retain the traction element. In the case of an elastic band, the elastic band may be retained on a hook of the anchor.

The mesial element 10 comprises an arm 13 which extends generally in a mesial-distal direction, ending in a substantially ball-shaped pivot 14. The pivot in this example may be substantially ball-shaped with two opposed planar surfaces.

As schematically illustrated in figure 2B, the pivot 14 may be arranged in a receptacle of the distal element 20.

This way, a force pulling the canine in the mandible backwards (i.e., in the distal direction) is provided. If the patient is wearing e.g., a splint (or another fixation device) that acts as a solid anchor and fixes the teeth of the maxilla in position, it may be ensured that the teeth in the maxilla do not move forwards, and that the canine in the mandible is pulled backwards. As noted before, rather than applying a distalization force on a segment of teeth in the mandible, the distalization force may be applied to a segment of teeth in the maxilla.

Due to the connection between the mesial element 10 and the distal element 20 of the orthodontic device, the molar may thus also be pushed backwards. At the same time, due to the shape of the arm in between the canine and the molar and due to the position of the distal element on the molar, a rotational force is also exerted upon the molar. This rotational force may result in a pivotal movement about the palatal root of the maxillary molar. Also, a rotation in the distal direction of the molar ("uprighting") may result. Thus a backwards force and a rotational force may be exerted upon the molar at the same time.

Figures 3A - 3C illustrate an example of an orthodontic device according to the present disclosure. According to a first aspect, an orthodontic device 50 for the segmental distalization of a posterior jawbone area is provided. The device 50 comprises a mesial element 30 having a mesial base 31 surface configured for attachment to a premolar or a canine, an arm 33 comprising a pivot 34 at a distal end of the arm 33. The device 50 further comprises a distal element 40 having a distal base surface 41 configured for attachment to a molar, and a receptacle. The pivot 34 of the arm 33 is arranged in the receptacle, and the distal element 40 or a distal portion of the arm 33 comprises a distal anchoring structure 48 for coupling a first distalization force element.

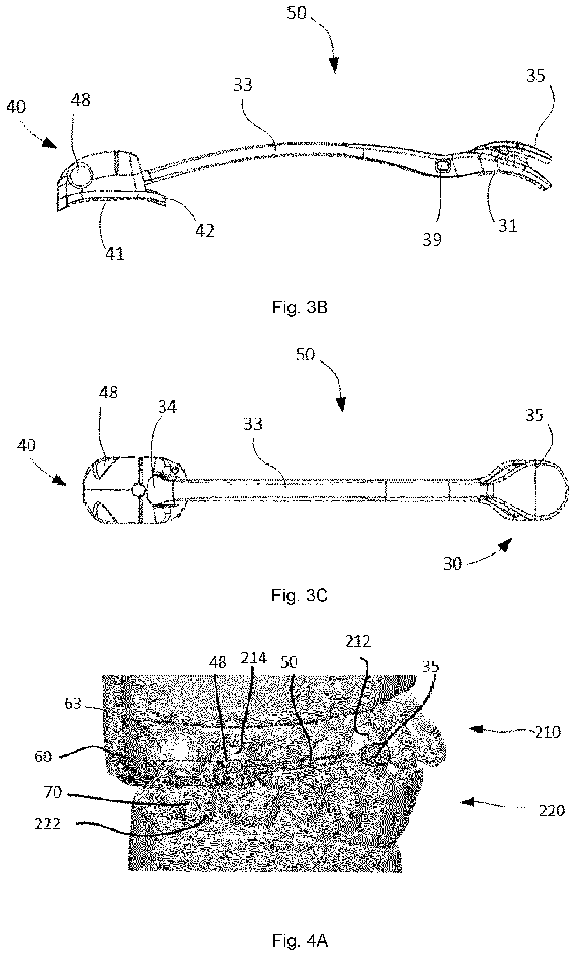

In the example of figure 3, the mesial element 30 comprises a projection 35 for coupling with a second distalization force element. The second distalization force element may be an elastic band, which may act similarly to what was described before.

In other examples, a proximal portion of the arm may comprise a projection for coupling with an elastic band.

In the example of figure 3, the arm is integrally formed with the mesial element 30. In further examples, the arm may be attached, particularly fixedly attached to the mesial element 30.

The pivot 34 may be substantially condyle-shaped, or ball-shaped, or the pivot may be ball-shaped with diametrically opposed planar surfaces. The shape of the pivot 34 and receptacle may be designed such that rotation of the pivot around one or more axes is limited, in particular by the pivot 34 touching an inside or border of the receptacle.

In some examples, e.g. in the example of figure 3, the distal anchoring structure comprises an orifice 48 for receiving and retaining a part of the first distalization force element. The orifice 48 in this example is arranged in the distal element. The orifice 48 may be a through-hole through the distal element in an occlusal-gingival direction.

In this example, the distal element 40 comprises a distal base 42, and a distal cap 44 attached to the distal base 42. The receptacle of the distal element 40 may be arranged between the distal base 42 and the cap 44. The distal cap 44 may be welded, mechanically fastened or otherwise attached to the distal base 42.

In some examples, a proximal portion of the arm 33 comprises a hole 39 for coupling an auxiliary arm. Such an auxiliary arm may be used to introduce further forces to the device 50.

A first axis may be defined as being substantially perpendicular to the distal base surface (as illustrated in figure 1b), and a second axis is defined as a mesial-distal direction substantially parallel to the distal base surface and substantially perpendicular to the first axis.

The pivot 34 has a mesial surface and a distal surface. An interior shape of the receptacle (in this case an interior shape of the distal cap 44) is such that the pivot can be rotated about the first axis over an angle between 1º and 45º, specifically between 5º and 20º, and more specifically between 8º and 15º. The rotation about the first axis may be limited by the mesial and/or distal surface touching against an inside of the distal cap.

The pivot 34 has an upper surface and a lower surface. The interior shape of the receptacle of the distal element 40 is such that the pivot 34 can be rotated about the second axis and over an angle between 1º and 30º, specifically between 5º and 15º, The rotation about the second axis may be limited by the upper surface touching against an inside of the receptacle (in this case, the distal cap 44) and the lower surface touching against the distal base 42.

The pivot 34 may have a longitudinal axis and the receptacle is such that the pivot can be rotated about the longitudinal axis over an angle between 0º and 60º, specifically between 15º and 45º.

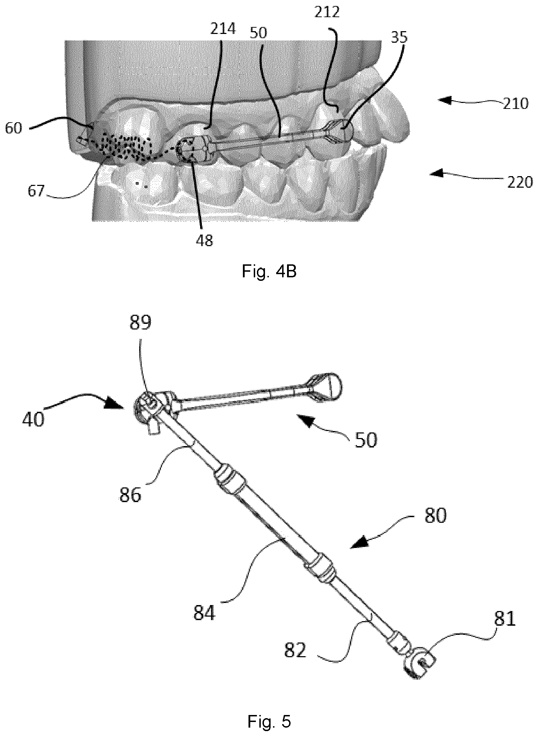

Figures 4A and 4B schematically illustrate two methods of treatment involving the device 50 of figure 3. In this particular case, the malocclusion may be a class II malocclusion. Class II malocclusions are generally characterized by upper molars that are too far forward compared to the lower molars. A Class II malccolusion may also be known as an "overbite". Contrary to class II, class III malocclusions are characterized generally by lower molars that are too far forward compared to the upper molars. This may also be known as "underbite".

A method for treating a malocclusion in a patient is provided in accordance with a further aspect of the present disclosure. The method comprises providing the orthodontic device 50, or any herein illustrated example thereof. The mesial base surface 31 of the orthodontic device 50 may be attached to a premolar or, in this example to a canine 212 of the patient.

The distal base surface 42 of the orthodontic device 50 may be attached to a molar 214 of the patient. The method further comprises providing a first distalization force element and coupling the first distalization force element to the distal anchoring structure 48 and activating the first distalization force element.

In this example, the first distalization force element may be an elastic band, a (Nitinol) ligature, a coil spring or other intramaxillary device, which may be attached to a TAD 60 and anchoring structure 48 of the distal element 40 of orthodontic device 50. The TAD 60 may be a small screw or mini-implant, which may be made e.g. of titanium.

The first distalization force element may, at a first end, extend through the orifice 48 of the distal element 40 of the orthodontic device 50 and at the other end be attached to the TAD. The first distalization force element may in some examples be stretched during mounting such that it has the tendency to pull the TAD and orthodontic device 50 closer together. A result may be a pulling force in a distal direction on the distal element 40. Since the distal element 40 is connected to the mesial element, the whole segment of teeth extending from molas 214 to canine 212 may be pulled in a distal direction in order to correct the class II malocclusion.

In the example of figure 4A, the first distalization force element is a ligature 63.

In addition, a further traction device, and particularly an elastic band may be arranged around projection 35 on the mesial element and around a hook on anchor 70. Anchor 70 in this case may be a lingual button, e.g. a Carriere 3D Motion Sidekick. In this configuration, a further distal force is thus provided on the orthodontic device 50.

In some other examples, the anchor may be a hook on a bracket or on a molar tube, or on a temporary anchorage device (TAD).

In the illustrated example, the orthodontic device 50 is arranged in a maxilla 210 of the patient. The orthodontic device 50 may be used for moving a segment of teeth in the maxilla, e.g. to correct an overbite. The anchor 70 for the further traction device (e.g. elastic band) in this case may thus be mounted in mandible 220.

Figure 4B illustrates a different method of treatment using the same orthodontic device 50. Figure 4B may also be illustrative for a different stage of the same treatment, i.e. during a period of time, the configuration of figure 4A may be used, whereas during another period of time, the configuration of figure 4B may be used.

In the configuration of figure 4B, only a single distalization force is provided. No elastic band is arranged around projection 35. Only the first distalization force element which may extend between TAD 60 and orifice 48 of the orthodontic device. In this specific example, another possibility of a first distalization force element is shown, namely a coil spring 67.

In an alternative arrangement, the same or similar orthodontic device 50 may be used as shown in figure 5. Figure 5 illustrates an example of a combination of an orthodontic device with another first distalization force element. In examples, the first distalization force element may be a class II correction device. In particular, the class II correction device may be an intermaxillary device.

In the example of figure 5, the first distalization force element in this example is a Twin Force^{®} Bite Corrector. One end 81 of the appliance 80 may be connected to a tooth in the mandible, e.g. a canine. The other end 89 may be coupled to the distal element 40 of orthodontic device 50. In particular, end 89 may be coupled to a suitable anchoring structure on the distal element 40.

In examples, the end 89 may be coupled directly to the anchoring structure. In other examples, an adapter may be arranged between end 89 and the anchoring structure on the distal element 40. Between the first end 81 and second end 86, a tube connects the mandible to the maxilla. In this particular example, a central tube 84 is connected to tubes 82 and 86 at either end. The tubes 82 and 86 have a telescopic bias towards opposite sides of the central tube 84. The tube 82 may thus push the maxilla in a mesial direction, and the tube 86 may push the mandible in the distal direction.

In the examples, the first dsitalization force element may be a class II correction device. Suitable class II correction device include e.g. a Herbst appliance, a Forsus appliance, a Jasper Jumper or a Powerscope^{™}, commercially available from American Orthodontics, Twin Force^{®} Bite Corrector, TruEase^{™} Bite Corrector commercially available from Ortho Technology, CS^{®}5 commercially available from Dynaflex^{®}. These devices may be used as stand-alone appliances in various orthodontic treatments, particularly for class II correction. However, within the scope of the present disclosure they may be combined with examples of the orthodontic devices 50 described herein, in order to collaborate and provide a more efficient treatment (depending on the patient's malocclusion and specific needs) than would be possible with either of these devices by themselves.

In further examples, extra-oral device such as headgear may also be used.

Although not further illustrated herein, in other examples, the orthodontic device 50 may be arranged in a mandible of the patient. In these examples, a TAD or other anchor may be arranged in the maxilla. An elastic band may thus pull the orthodontic device in the mandible in the distal direction. Similarly to what was shown in figures 4A and figure 5, throughout the treatment, or during specific stages of the treatment, the actuation of the elastic band may be combined with the actuation of a first distalization force element which is coupled to an anchoring structure of orthodontic device 50.

In such examples, the first dsitalization force element may be a class III correction device. The class III correction device may be an intermaxillary device. Class III versions of the aforementioned devices may be used in these examples, e.g. a class III TruEase^{™} Bite Corrector, an inverted Forsus appliance (possibly anchored with miniscrew), a CS^{®}5 class III corrector and others.

Alternatively, or during specific stages of treatment, the first distalization force element may be a device selected from the following: elastic band, elastic ligature, nitinol ligature, coil spring.

In examples of the methods (either for class II or class III correction), during a period of time, a distalization force is only provided by the first distalization force element, and wherein during another period of time a distalization force is provided at the mesial element by an elastic band.

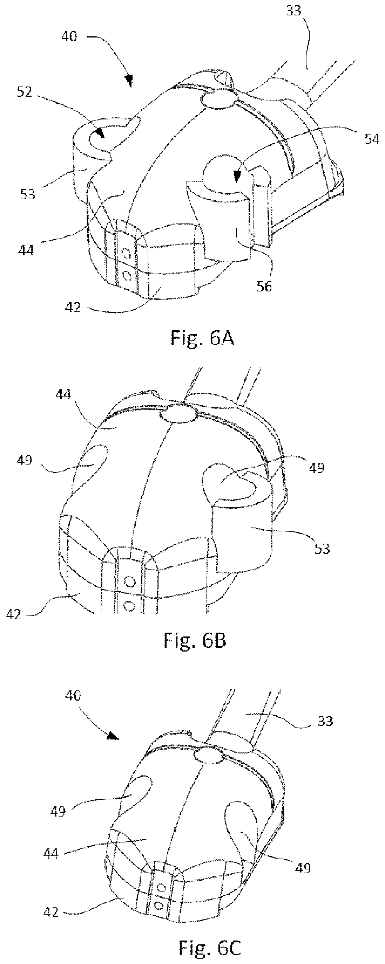

Figures 6A - 6C schematically illustrate further examples of orthodontic devices according to the present disclosure, wherein alternative anchoring structures are provided for coupling with a first distalization force element.

In the example of figure 3, the orifice 48 was illustrated to generally extends along an occlusal-gingival direction. It should be clear that the orifice does not necessarily need to be along this direction.

In the example of figure 6, a distal element 40 comprises a distal base 42, to which a distal cap 44 is attached. The pivot of arm 33 is retained within the receptacle formed between the distal base 42 and distal cap 44. In this example, the distal element comprises two orifices, 52, 54 which generally extend along a lingual-labial direction.

The orifices 52, 54 are formed on the distal cap 44 in this example. The orifices may be closed, and completely surrounded by annular part or ring 53 formed as a protrusion on the outer surface of distal cap 44. Ring 53 in this example may be provided on a gingival side.

The orifice 54 on the occlusal side of the distal element 40 may be partly open. The annular structure 56 is interrupted in this case to provide an opening for introduction of an adapter or a portion of the first distalization force element. Once introduced into the orifice 54, the first distalization force element may be retained in the orifice: the distal force will be exerted on a distal inner surface of the annular structures 52, 56.

The orifices 52, 54 in the example of figure 6 are partly formed by recesses on either side of the distal element, particularly the distal cap 44.

It should be clear that in some examples, the orifices 52, 54 may be the same on both the occlusal and gingival side. In other examples, a single orifice may be provided either on the occlusal or on the gingival side. I.e. the distal element may comprise a ring to form the orifice at an occlusal side surface of the distal element and/or a ring at a gingival side surface of the distal element.

The distal anchoring structure may comprise one or more recesses formed at an external surface of the distal element configured for retaining a part of the first distalization force element. In the example of figure 6C, recesses 49 are formed both on the occlusal and on the gingival side of the distal element. A suitably shaped part of the first distalization force element may be introduced into and retained in the recesses 49. Figure 6B illustrates how rings and recesses may be combined to provide the anchoring structure.

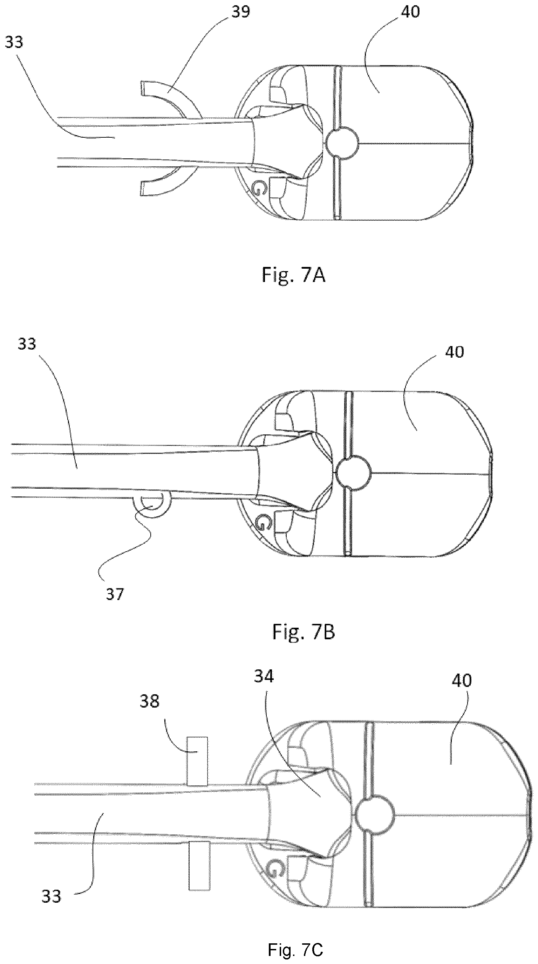

In examples, the anchoring structure may be provided in a distal portion of arm 33, such as illustrated e.g. in figures 7A and 7B. In particular, the anchoring structure may be provided at the distal most 33%, specifically the distal most 25% of the length of the arm 33. A suitable clearance between the anchoring structure and the distal element may be chosen so that the first distalization force element does not impede any movement of the distal element 40 or arm 33.

In examples, the anchoring structure on device 50 comprises one or more protrusions on the arm.

In the example of figure 7A, two hooks 39 are provided at a distal portion of arm 33.

In further examples, the arm 33 may comprises one or more rings, such as ring 37 illustrated in figure 7B.

In yet further examples, like in the example of figure 7C, the arm may comprise a different protrusion, or set of protrusions 48, which may be polygonal, e.g. rectangular. A ligature, or other distalization force element may be attached to one or both of the protrusions 48.

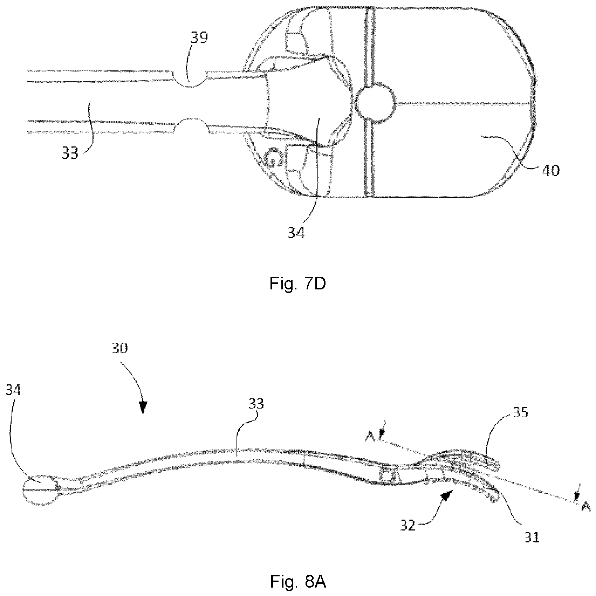

In a further example, the arm 33 may comprise one or more recesses 39, as illustrated in figure 7D. The recesses 39 may retain a portion of the first distalization force element coupled to orthodontic device 50.

In some examples, a portion of the fist distalization force element may be crimped onto the bar 33 and the provided anchoring structure.

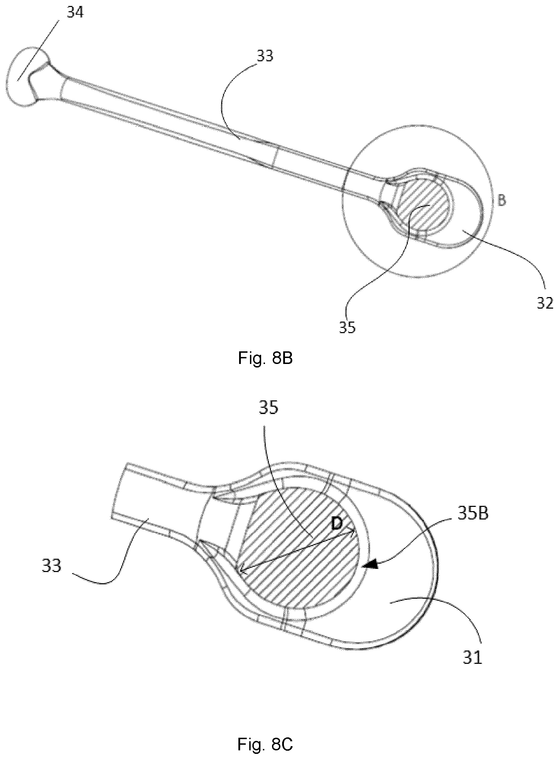

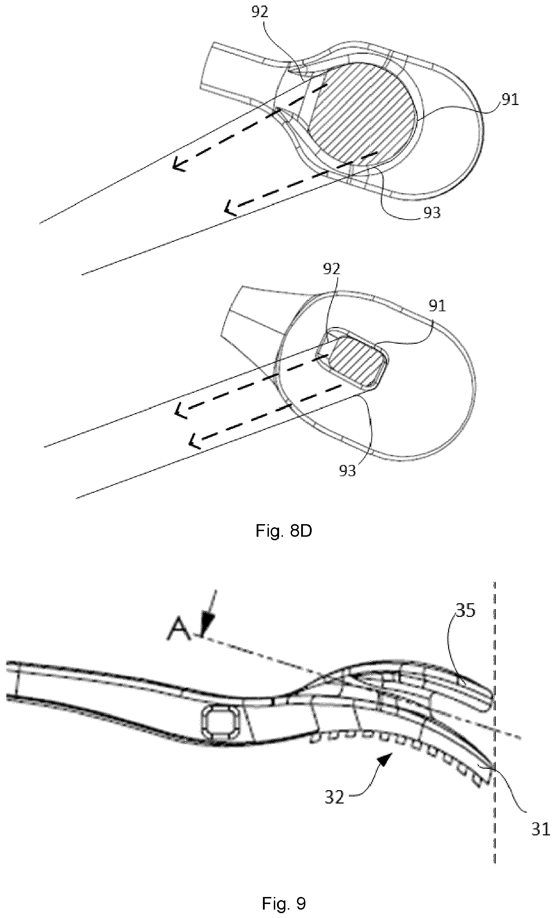

Figures 8A - 8C schematically illustrate an example of an orthodontic device. Figure 8D schematically illustrates a comparison of forces on the example of the orthodontic device of figure 8 and an orthodontic device of the prior art. Figures 8A -8D and 9 will be used to describe a specific version of projection 35 which may be incorporated in orthodontic devices according to the present disclosure. The projection 35 according to these figures may be incorporated in orthodontic device 50 according to any of the examples of figures 3-7.

Figure 8A illustrates an orthodontic device for the segmental distalization of a posterior jawbone area comprising a mesial element 30 having a mesial base surface 32 configured for attachment to a premolar or a canine. The device further comprises an arm 33 comprising a pivot 34 at a distal end of the arm.

The device further comprises a distal element having a distal base surface configured for attachment to a molar, and a receptacle, wherein the pivot of the arm is arranged in the receptacle. The distal element is not illustrated in figure 8, but may be the same or similar to the distal elements illustrated in figures 2-7.

The mesial element 30 comprises a projection 35 defining a groove 35B for fitting an elastic band (see e.g. figure 8C), wherein the groove is arranged along a rounded convex surface of the projection 35, wherein the rounded convex surface has a diameter of at least 3mm.

In examples, the diameter of the rounded convex surface may be 5 mm or more. The groove 35B may be formed between a base 32 of the mesial element and an edge of the projection. Figure 8A illustrates the location of the cross-section A-A, which is further illustrated in figure 8B, and in more detailed level in figure 8C.

The orthodontic device of figure 8 has an enlarged surface area of contact with the elastic band than in prior art devices, which typically use very small hooks, which can have a rounded or polygonal (square, rectangle) cross-section. In other words, the hook is much wider than in prior art devices.

The use of small hooks or even "as small as possible" is generally widely extended in orthodontics, in particular with the objective to avoid hooks impinging on tissue of the patient. Particularly, the intra-oral mucosa is sensitive to impingement. The present disclosure provides examples of orthodontic devices that deviate from this thinking. The curved, wider hooks as presented herein have been found to be more efficient in treatment.

Without wishing to be bound to a specific theory, one possible explanation is the following: when an elastic band is pulled around a hook with a smaller diameter, the average amount of friction between the elastic (rubber) and the hook will be greater than if the elastic band is pulled around a larger diameter hook. The smaller diameter hook has less surface area in contact with the elastic, which can mean that there is more pressure on each point of contact between the elastic and the hook. Conversely, when the elastic is pulled around a larger diameter hook, the average amount of friction between the elastic and the hook will be lower, as there is more surface area in contact with the elastic.

The forces applied to the elastic band are thus smaller at each point of contact, and the elastic bands degrade slower over time as forces are being distributed over a larger surface area in the direct axis of application. This effect is especially noticeable if the corners of the square hook are sharp. In such case, the elastic bands are working less efficiently as the higher applied forces are degrading the elastics quicker over a period of time as it is being distributed over a smaller surface area in the direct axis of application.

It is noted that all latex and non-latex elastomerics typically degrade over time when there is pressure applied.

Furthermore, when the elastic band is stretched along the same distance but stretched over a larger diameter hook as show in Figure 8, it will exert higher tension as compared to the smaller hook diameter known from the prior art.

As may be seen e.g. in the top view of figure 3C, the projection 35 of the mesial element 30 may be substantially teardrop-shaped to follow the natural pull of the elastic around the cross-section towards the mating orthodontic attachment anchor (i.e. sidekick, buccal tube etc.) The tear drop shop reduces the stress concentration points in the elastics and increases the area of contact with the elastic band.

As result of the tear drop design feature and its engagement interface with the elastic, the elastics are working more efficiently as the lower applied forces are degrading the elastics slower over a period of time.

In accordance with a further aspect, an orthodontic assembly for the segmental distalization of a posterior jawbone area is provided. The assembly comprises a mesial element 30 having a mesial base surface 31 configured for attachment to a premolar or a canine, an arm 33 comprising a pivot 34 at a distal end of the arm, and a distal element having a distal base surface configured for attachment to a molar, and having a receptacle. The pivot 34 of the arm 33 is arranged in the receptacle. The mesial element 30 comprises a projection 35 and the assembly further comprises an anchor (e.g. button, sidekick, molar tube, TAD or other), such that an elastic band can be fitted around the projection 35 and the anchor to provide a distalization force.

In accordance with this aspect, the projection 35 is shaped such that when a mesial portion 91 of the elastic band is arranged around the projection 35, a first portion 92 of the elastic band adjacent to the mesial portion 91 at a first side of the mesial portion and a second portion 93 of the elastic band adjacent to the mesial portion at a second side of the mesial portion are not parallel to each other.

This effect is illustrated in the top figure of figure 8D and may be compared to the situation in the case of a small prior art hook illustrated in the bottom figure of figure 8D. Because of the small size, the portions 92, 93 that are adjacent to the portion wrapped around the hook are substantially parallel to each other. In the case of the top figure, because of the width of the projection 35, the portions 92, 93 that are adjacent to portion 91 (which is the portion of the elastic band that is in contact with the hook/projection) are not parallel to each other. Instead of a single force vector, two different force vectors are thus generated, leading to a more homogeneous distribution of forces as well.

As illustrated in figures 8A - 8C, the projection may have a rounded groove for receiving the mesial portion of the elastic band. The projection may have e.g. a substantially circular cross-section through a plane of the groove. A diameter of the circular cross-section may be 3 mm or more, specifically 4 mm or more, more specifically 5 mm or more.

In other examples, a cross-section through a plane of the groove may be substantially ovaloid. A distance between the first portion 92 of the elastic band and the second portion 93 of the elastic band is 3 mm or more, specifically 4 mm or more, more specifically 5 mm or more.

In examples, such as illustrated in figure 9, a mesial edge of the projection 35 may substantially coincide with a mesial edge of the mesial base surface 32. In other examples, the mesial edge of the projection may be arranged anterior of a mesial edge of the mesial base surface. I.e. the mesial edge of the projection does not extend beyond the edge of the base surface. E.g. 10 - 40% of a length of the distal element may be "free", i.e. not overhung by the projection 35. The risk of irritation of a patient's tissue may be reduced in such examples.

An outer surface of the projection is substantially smooth and rounded in order to avoid impingement of the projection with a patient's tissue. A top surface of the projection may be substantially teardrop shaped as commented before.

Although not further illustrated in figures 8 and 9, also in these examples, the distal element of orthodontic device 50 may comprise an anchoring structure for coupling with a distalization force device. All other features commented on with respect to the pivot, the distal element, the first distalization force element etc. may be combined with the wide and rounded projection 35.

E.g. the arm may be integrally formed or fixedly attached with the mesial element. Th pivot may be substantially condyle-shaped, or ball-shaped, or wherein the pivot is ball-shaped with diametrically opposed planar surfaces. The anchoring structure may comprise a through-hole in the distal element. The through-hole may be arranged substantially along an occlusal-gingival direction.

Also, as illustrated in figure 8A, a proximal portion of the arm 33 (the proximal most 33% or 25% of the length of the arm 33) may comprise a hole for coupling an auxiliary arm.

And also the range of movement as allowed by the pivot within the receptacle may be the same as herein previously disclosed. In examples, the pivot can be rotated about the first axis over an angle between 1º and 45º, specifically between 5º and 20º, and more specifically between 8º and 15º. In examples, the pivot can be rotated about the second axis and over an angle between 1º and 30º, specifically between 5º and 15º. And in examples, the pivot has a longitudinal axis and the receptacle is such that the pivot can be rotated about the longitudinal axis over an angle between 0º and 60º, specifically between 15º and 45º.

The different components of the orthodontic devices illustrated herein may be manufactured in a variety of ways, including moulding, additive manufacturing like 3D printing, machining or other. The different components may be made of a variety of suitable materials, including metals (e.g. stainless steel or titanium), ceramics, plastics (e.g. PEEK, polysulfones and others), or composites (e.g. fibre reinforced polymers).

In a specific example, placing the distal cap over the pivot may comprise 3D printing the distal cap over the distal base, when the pivot has already been positioned on the distal cap.

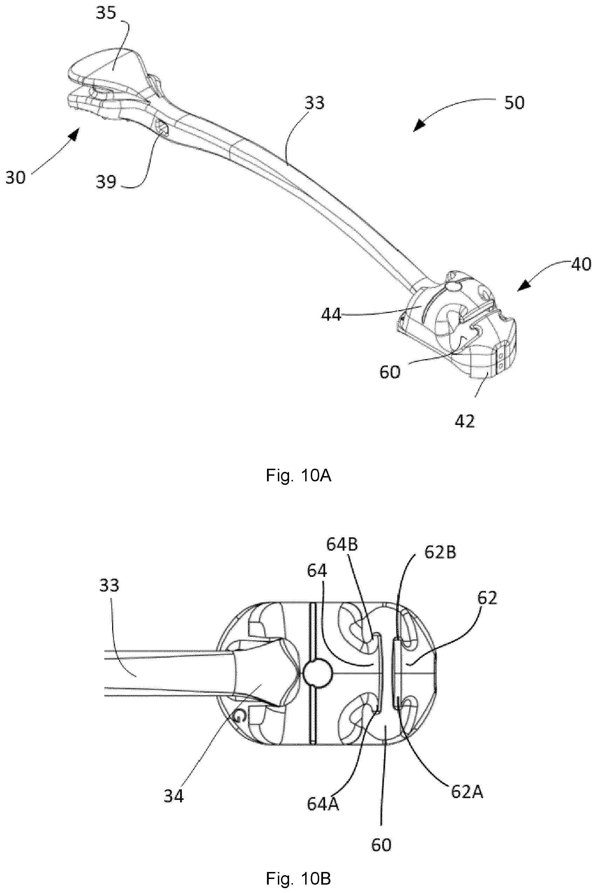

Figures 10A - 10C schematically illustrate yet a further example of an orthodontic device 50 incorporating a distal anchoring structure. An orthodontic device 50 for the segmental distalization of a posterior jawbone area is shown, which comprises a mesial element 30 having a mesial base surface 31 configured for attachment to a premolar or a canine. The device 50 further comprises an arm 33 comprising a pivot 34 at a distal end of the arm. The device 50 further comprises a distal element 40 having a distal base surface 41 configured for attachment to a molar, and a receptacle.

The distal element 40 in this example comprises a distal base 42 and a distal cap 44. A receptacle is formed between the distal base 42 and distal cap 44. The pivot 34 of the arm is arranged in this receptacle.

Also in this example, the distal element 40 comprises a distal anchoring structure for coupling a first distalization force element. Also in this example, a mesial portion of the arm 33 comprises a hole 39 for coupling an auxiliary arm. Such an auxiliary arm may be used to introduce further forces to the device 50.

The distal anchoring structure may be incorporated in the distal cap 44. The distal cap 44 in this particular case comprises an orifice 60 which extends in the occlusal-gingival direction through the distal element 40. The orifice 60 is delimited by an upper surface. The distal cap 44 comprises two cleat hooks 62, 64 around which ligatures may be arranged. The distal cap 44 in this example comprises a distal cleat hook 62, and a mesial cleat hook 64.

The cleat hooks may be regarded as T-shaped hooks, i.e. hooks extending in opposite directions. Cleat hook 62 comprises hooks 62A, 62B at an occlusal and gingival side. Similarly, cleat hook 64 comprises hooks 64A, 64B at an occlusal and gingival side.

The first distalization force element in this example may e.g. be an elastic or rubber band or a ligature. In examples, the ligature may be a nitinol ligature. In this particular example, e.g. a stainless steel ligature may be wound around one of the cleat hooks, particularly the distal cleat hook.

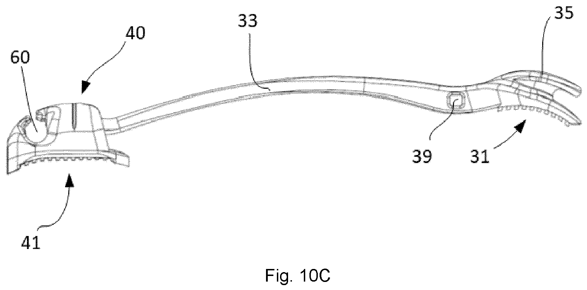

As may be more clearly seen in figure 10C, the orifice 60 in the occlusal-gingival direction may also be used as distal anchoring structure for coupling a first distalization force element. In this particular example, different options are thus provided for an orthodontist to provide a distalization force. Depending on the patient and the malocclusion, the cleat hooks may be used or the orifice may be used, and different distalization force elements may be used. During (portions) of the treatment, a first distalization force element may be combined with a second distalization force element around. Or the use of first and second distalization force elements may be alternated.

The features shown in figure 10 may also be used in distal elements wherein instead of a separate distal base and cap, the distal element may be integrally formed.

For reasons of completeness, a number of aspects of the present disclosure are set out in the following numbered clauses:
Clause 1. An orthodontic device for the segmental distalization of a posterior jawbone area comprising
   a mesial element having a mesial base surface configured for attachment to a premolar or a canine,
   an arm comprising a pivot at a distal end of the arm,
   a distal element having a distal base surface configured for attachment to a molar, and a receptacle, wherein
   the pivot of the arm is arranged in the receptacle, and wherein
   the distal element or a distal portion of the arm comprises a distal anchoring structure for coupling a first distalization force element.
Clause 2. The orthodontic device of clause 1, wherein the mesial element or a proximal portion of the arm comprises a projection for coupling with a second distalization force element.
Clause 3. The orthodontic device of clause 2, wherein the second distalization force element is an elastic band.
Clause 4. The orthodontic device of any of clauses 1 - 3, wherein the arm is integrally formed or fixedly attached with the mesial element.
Clause 5. The orthodontic device of any of clauses 1 - 4, wherein the pivot is substantially condyle-shaped, or ball-shaped, or wherein the pivot is ball-shaped with diametrically opposed planar surfaces.
Clause 6. The orthodontic device of any of clauses 1 - 5, wherein the distal anchoring structure comprises an orifice for receiving and retaining a part of the first distalization force element.
Clause 7. The orthodontic device of clause 6, wherein the orifice is arranged in the distal element.
Clause 8. The orthodontic device of clause 7, wherein the orifice is a through-hole through the distal element in an occlusal-gingival direction.
Clause 9. The orthodontic device of clause 7, wherein the orifice extends along a lingual-labial direction.
Clause 10. The orthodontic device of clause 9, wherein the distal element comprises a ring to form the orifice at an occlusal side surface of the distal element and/or a ring at a gingival side surface of the distal element.
Clause 11. The orthodontic device of any of clauses 1 - 10, wherein the distal anchoring structure comprises one or more recesses formed at an external surface of the distal element configured for retaining a part of the first distalization force element.
Clause 12. The orthodontic device of clause 11, wherein the distal element comprises a recess at an occlusal side of the distal element and/or a recess at a gingival side of the distal element.
Clause 13. The orthodontic device of any of clauses 1 - 12, wherein the anchoring structure comprises one or more protrusions on the arm.
Clause 14. The orthodontic device of clause 13, wherein the arm comprises one or more hooks or one or more rings.
Clause 15. The orthodontic device of clause 13, wherein the arm comprises one or more recesses.
Clause 16. The orthodontic device of any of clauses 1 - 15, wherein a proximal portion of the arm comprises a hole for coupling an auxiliary arm.
Clause 17. The orthodontic device of any of clauses 1 - 16, wherein a first axis is defined as being substantially perpendicular to the distal base surface, and a second axis is defined as a mesial-distal direction substantially parallel to the distal base surface and substantially perpendicular to the first axis, and wherein
   the pivot has a mesial surface and a distal surface, wherein an interior shape of the distal cap is such that the pivot can be rotated about the first axis over an angle between 1º and 45º, specifically between 5º and 20º, and more specifically between 8º and 15º, and optionally wherein the rotation about the first axis is limited by the mesial and/or distal surface touching against an inside of the distal cap.
Clause 18. The orthodontic device according to clause 17, wherein the pivot has an upper surface and a lower surface, and wherein the interior shape of the receptacle of the distal element is such that the pivot can be rotated about the second axis and over an angle between 1º and 30º, specifically between 5º and 15º, and wherein the rotation about the second axis is limited by the upper surface touching against an inside of the distal cap and the lower surface touching against the distal base.
Clause 19. The orthodontic device according to any of clauses 1 - 18, wherein the pivot has a longitudinal axis and the receptacle is such that the pivot can be rotated about the longitudinal axis over an angle between 0º and 60º, specifically between 15º and 45º.
Clause 20. A method for treating a malocclusion in a patient, comprising:
   providing the orthodontic device of any of clauses 1 - 19;
   attaching the mesial base surface of the orthodontic device to a premolar or canine of the patient;
   attaching the distal base surface of the orthodontic device to a molar of the patient;
   providing a first distalization force element and coupling the first dsitalization force element to the distal anchoring structure; and
   activating the first distalization force element.
Clause 21. The method of clause 20, further comprising attaching an elastic band around a projection on the arm or on the mesial element, and around an anchor mounted in a mouth of the patient.
Clause 22. The method of clause 21, wherein the anchor is a hook on a bracket or on a molar tube, or on a temporary anchorage device (TAD) or on a button mounted on a tooth.
Clause 23. The method of any of clauses 20 - 22, wherein the orthodontic device is arranged in a maxilla of the patient.
Clause 24. The method of clause 23, wherein the first distalization force element is a class II correction device.
Clause 25. The method of clause 24, wherein the class II correction device is an intermaxillary device.
Clause 26. The method of clause 25, wherein the class II correction device is a Herbst appliance, or a Forsus appliance.
Clause 27. The method of any of clauses 20 - 26, wherein the first distalization force element is one or more of the following: elastic band, elastic ligature, nitinol ligature, coil spring, and optionally wherein the first distalization force element is attached to an anchor, specifically an anchor in the maxilla.
Clause 28. The method of any of clauses 20 - 22, wherein the orthodontic device is arranged in a mandible of the patient.
Clause 29. The method of clause 28, wherein the first distalization force element is a class III correction device.
Clause 30. The method of clause 29, wherein the class III correction device is an intermaxillary device.
Clause 31. The method of clause 28, wherein the first distalization force element is one or more of the following: elastic band, elastic ligature, nitinol ligature, coil spring, and optionally wherein the first distalization force element is attached to an anchor, specifically an anchor in the mandible.
Clause 32. The method of any of clauses 20 - 31, wherein during a period of time, a distalization force is only provided by the first distalization force element, and wherein during another period of time a distalization force is provided by an elastic band.
Clause 33. The method of any of clauses 20 - 32, wherein the distal anchoring structure is coupled to an adapter, and the adapter is attached to the first distalization force element.
Clause 34. A kit comprising the orthodontic device of any of clauses 1 - 19, and an adapter for coupling to the first distalization force element.
Clause 35. The kit of clause 34, comprising multiple adapters for coupling to a variety of first distalization force elements.
Clause 36. An orthodontic assembly for the segmental distalization of a posterior jawbone area comprising:
   a mesial element having a mesial base surface configured for attachment to a premolar or a canine,
   an arm comprising a pivot at a distal end of the arm,
   a distal element having a distal base surface configured for attachment to a molar, and a receptacle, wherein
   the pivot of the arm is arranged in the receptacle, wherein
   the mesial element comprises a projection and the assembly further comprising an anchor, such that an elastic band can be fitted around the projection and the anchor to provide a distalization force,
   wherein the projection is shaped such that when a mesial portion of the elastic band is arranged around the projection, a first portion of the elastic band adjacent to the mesial portion at a first side of the mesial portion and a second portion of the elastic band adjacent to the mesial portion at a second side of the mesial portion are not parallel to each other.
Clause 37. The orthodontic assembly of clause 36, wherein the projection has a rounded groove for receiving the mesial portion of the elastic band.
Clause 38. The orthodontic assembly of clause 36 or 37, wherein the projection has a substantially circular cross-section through a plane of the groove.
Clause 39. The orthodontic assembly of clause 38, wherein a diameter of the circular cross-section is 3 mm or more, specifically 4 mm or more, more specifically 5 mm or more.
Clause 40. The orthodontic assembly of clause 36 or 37, wherein a cross-section through a plane of the groove is substantially ovaloid.
Clause 41. The orthodontic assembly of any of clauses 36 - 40, wherein a distance between the first portion of the elastic band and the second portion of the elastic band is 3 mm or more, specifically 4 mm or more, more specifically 5 mm or more.
Clause 42. The orthodontic assembly of any of clauses 36 - 41, wherein a mesial edge of the projection substantially coincides with a mesial edge of the mesial base surface.
Clause 43. The orthodontic assembly of any of clauses 36 - 41, wherein a mesial edge of the projection is arranged anterior of a mesial edge of the mesial base surface.
Clause 44. The orthodontic assembly of any of clauses 36 - 43, wherein an outer surface of the projection is substantially smooth and rounded.
Clause 45. The orthodontic assembly of any of clauses 36 - 44, wherein a top surface of the projection is substantially teardrop shaped.
Clause 46. The orthodontic device assembly of any of clauses 36 - 45 wherein the distal element or a distal portion of the arm comprises a distal anchoring structure for coupling a further distalization force element.
Clause 47. An orthodontic device for the segmental distalization of a posterior jawbone area comprising:
   a mesial element having a mesial base surface configured for attachment to a premolar or a canine,
   an arm comprising a pivot at a distal end of the arm,
   a distal element having a distal base surface configured for attachment to a molar, and a receptacle, wherein
   the pivot of the arm is arranged in the receptacle, wherein
   the mesial element comprises a projection defining a groove for fitting an elastic band, wherein
   the groove is arranged along a rounded convex surface of the projection, wherein the rounded convex surface has a diameter of at least 3mm.
Clause 48. The orthodontic device of clause 47, wherein the diameter of the rounded convex surface is 5 mm or more.
Clause 49. The orthodontic device of clause 47 or 48, wherein a groove is formed between a base of the mesial element and an edge of the projection.
Clause 50. The orthodontic device of any of clauses 47 - 49, wherein the distal element or distal portion of the arm comprises an anchoring structure for coupling with a distalization force device and optionally wherein the anchoring structure comprises a through-hole in the distal element.
Clause 51. The orthodontic device of clause 50, wherein the through-hole is arranged substantially along an occlusal-gingival direction.
Clause 52. The orthodontic device of any of clauses 46 - 51, wherein the arm is integrally formed or fixedly attached with the mesial element.
Clause 53. The orthodontic device of any of clauses 46 - 52, wherein the pivot is substantially condyle-shaped, or ball-shaped, or wherein the pivot is ball-shaped with diametrically opposed planar surfaces.
Clause 54. The orthodontic device of any of clauses 46 - 53, wherein a proximal portion of the arm comprises a hole for coupling an auxiliary arm.
Clause 55. The orthodontic device of any of clauses 46 - 54, wherein a first axis is defined as being substantially perpendicular to the distal base surface, and a second axis is defined as a mesial-distal direction substantially parallel to the distal base surface and substantially perpendicular to the first axis, and wherein
   the pivot has a mesial surface and a distal surface, wherein an interior shape of the distal cap is such that the pivot can be rotated about the first axis over an angle between 1º and 45º, specifically between 5º and 20º, and more specifically between 8º and 15º, and optionally wherein the rotation about the first axis is limited by the mesial and/or distal surface touching against an inside of the distal cap.
Clause 56. The orthodontic device according to clause 55, wherein the pivot has an upper surface and a lower surface, and wherein the interior shape of the receptacle of the distal element is such that the pivot can be rotated about the second axis and over an angle between 1º and 30º, specifically between 5º and 15º, and wherein the rotation about the second axis is limited by the upper surface touching against an inside of the distal cap and the lower surface touching against the distal base.
Clause 57. The orthodontic device according to any of clauses 46 - 56, wherein the pivot has a longitudinal axis and the receptacle is such that the pivot can be rotated about the longitudinal axis over an angle between 0º and 60º, specifically between 15º and 45º.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. An orthodontic device for the segmental distalization of a posterior jawbone area comprising
a mesial element having a mesial base surface configured for attachment to a premolar or a canine,
an arm comprising a pivot at a distal end of the arm,
a distal element having a distal base surface configured for attachment to a molar, and a receptacle, wherein
the pivot of the arm is arranged in the receptacle, and wherein
the distal element or a distal portion of the arm comprises a distal anchoring structure for coupling a first distalization force element.

2. The orthodontic device of claim 1, wherein the mesial element or a proximal portion of the arm comprises a projection for coupling with a second distalization force element.

3. The orthodontic device of claim 2, wherein the second distalization force element is an elastic band.

4. The orthodontic device of any of claims 1 - 3, wherein the first distalization force element is a class II correction device, particularly wherein the class II correction device is an intermaxillary device.

5. The orthodontic device of any of claims 1 - 3, wherein the first distalization force element is one or more of the following: elastic ligature, nitinol ligature, coil spring, and optionally wherein the first distalization force element is attached to an anchor, specifically an anchor in the maxilla.

6. The orthodontic device of any of claims 1 - 5, wherein the arm is integrally formed or fixedly attached with the mesial element.

7. The orthodontic device of any of claims 1 - 6, wherein the pivot is substantially condyle-shaped, or ball-shaped, or wherein the pivot is ball-shaped with diametrically opposed planar surfaces.

8. The orthodontic device of any of claims 1 - 7, wherein the distal anchoring structure comprises an orifice for receiving and retaining a part of the first distalization force element.

9. The orthodontic device of claim 8, wherein the orifice is arranged in the distal element.

10. The orthodontic device of claim 9, wherein the orifice is a through-hole through the distal element in an occlusal-gingival direction.

11. The orthodontic device of claim 9, wherein the orifice extends along a lingual-labial direction.

12. The orthodontic device of claim 9, wherein the distal element comprises a ring to form the orifice at an occlusal side surface of the distal element and/or a ring at a gingival side surface of the distal element.

13. The orthodontic device of any of claims 1 - 12, wherein the distal anchoring structure comprises a recess at an occlusal side of the distal element and/or a recess at a gingival side of the distal element.

14. The orthodontic device of any of claims 1 - 13, wherein the anchoring structure comprises one or more protrusions on the arm.

15. The orthodontic device of any of claims 1 - 14, wherein the distal element comprises a distal base and a distal cap attached to the distal base, and wherein the receptacle of the distal element is formed between the distal cap and the distal base, and particularly wherein the distal cap comprises the distal anchoring structure.
